Europäisches Patentamt

European Patent Office

Office européen des brevets

(11) Numéro de publication : **0 146 448**
**B1**

(12)

# FASCICULE DE BREVET EUROPÉEN

(45) Date de publication du fascicule du brevet :
04.05.88

(21) Numéro de dépôt : 84402337.4

(22) Date de dépôt : 16.11.84

(51) Int. Cl.⁴ : **G 01 V   1/135**

(54) Dispositif pour engendrer des impulsions acoustiques par implosion, à l'intérieur d'un puits.

(30) Priorité : 29.11.83 FR 8319185

(43) Date de publication de la demande :
26.06.85 Bulletin 85/26

(45) Mention de la délivrance du brevet :
04.05.88 Bulletin 88/18

(84) Etats contractants désignés :
DE GB IT NL

(56) Documents cités :
FR-A- 2 272 455
FR-A- 2 436 403
US-A- 3 721 311
US-A- 3 949 831

(73) Titulaire : INSTITUT FRANCAIS DU PETROLE
4, Avenue de Bois-Préau
F-92502 Rueil-Malmaison (FR)

(72) Inventeur : Dedole, Pascal
12, boulevard Léon Louesse
F-92500 Rueil Malmaison (FR)
Inventeur : Laurent, Jean
5, rue du Moulle
F-78630 Morainvilliers Orgeval (FR)

EP 0 146 448 B1

Jouve, 18, rue St-Denis, 75001 Paris, France

## Description

La présente invention a pour objet un dispositif pour engendrer des impulsions acoustiques par implosion à l'intérieur d'un puits ou d'une cavité, et plus particulièrement un dispositif d'émission adapté à être descendu à une certaine profondeur dans un puits foré dans le sol, pour engendrer des impulsions acoustiques pouvant être utilisées dans le but d'effectuer des opérations de prospection sismique par exemple.

Une source sismique pour puits présente un certain nombre d'avantages par rapport à une source disposée à la surface. Une partie notable de l'énergie acoustique produite par celle-ci est en effet émise sous la forme d'ondes de surface ou d'ondes de RAYLEIGH inexploitables, et la partie de cette énergie qui est émise sous la forme d'ondes de types P ou S, est atténuée considérablement par la couche superficielle ou couche altérée (W. Z.). Le rendement énergétique en ondes P ou S d'une source de puits émettant sous la couche altérée est de ce fait beaucoup plus élevé.

Parmi les sources de puits d'un type connu, on peut citer celles qui utilisent des explosifs solides ou des mélanges gazeux explosifs. De telles sources sont décrites par exemple dans les brevets US n° 3.408.622 ou 3.858.167. On peut également citer les sources du type canon à l'air où des impulsions sismiques sont engendrées par de brusques décharges de gaz à l'intérieur du puits rempli d'eau. Une telle source est décrite par exemple dans le brevet français 2.311.322.

Par le brevet US n° 3.949.831, on connaît une source sismique marine du type à implosion comportant un corps constitué de deux chambres l'une avec l'autre par une partie resserrée pourvue de moyens de séparation actionnés par intermittence. Une des chambres est ouverte sur le milieu extérieur. Les deux chambres, à leurs extrémités opposées à la partie resserrée communiquent respectivement, la première en permanence avec le milieu extérieur, la seconde par intermittence avec un système pneumatique. De l'air comprimé est introduit dans la seconde chambre de manière à évacuer toute l'eau contenue dans le corps. Puis la seconde chambre est mise en communication avec une enceinte où règne un vide poussé. L'évacuation totale de l'air vers cette enceinte permet à l'eau extérieure de pénétrer brusquement dans la première chambre. Son arrêt, au niveau de la partie étranglée, provoque l'émission d'ondes sismiques. Dans un autre mode de réalisation la source sismique connue utilise un clapet dont le siège est ménagé sur l'élément de séparation desdites deux chambres. Un troisième mode de réalisation de ladite source se sert d'un piston coulissant dans la première chambre.

Par la demande de brevet français 2.272.455 on connait une source sismique à implosion comportant les éléments énoncés dans le préambule de la revendication 1 .

La source à implosion antérieure est adaptée à une utilisation marine mais se prête mal à une utilisation dans un puits foré généralement très étroit (de 10 à 30 cm de diamètre par exemple).

Le dispositif selon l'invention comportant les caractéristiques techniques énoncées dans la revendication 1 est bien adapté au fonctionnement dans un puits foré.

Les revendications 2 à 7 contiennent des modes de réalisation de l'invention. D'autres caractéristiques et avantages du dispositif apparaîtront à la lecture de la description ci-après d'un mode de réalisation préféré mais non limitatif, en se référant aux dessins annexés sur lesquels :

- la figure 1 représente schématiquement une vue en coupe du dispositif en position de déclenchement, le système hydraulique assurant le déplacement du premier piston et le maintien du clapet étant partiellement représenté ;

- la figure 2 représente schématiquement une vue d'ensemble en coupe du dispositif en position de repos, le système hydraulique étant représenté dans son entier ;

- la figure 3 représente schématiquement une vue d'ensemble en coupe du dispositif dans une position intermédiaire à la fin de la phase de poussée du premier piston vers sa première position (position d'armement) ;

- la figure 4 représente schématiquement une vue partielle du système hydraulique commandé pour provoquer un blocage du clapet contre son siège et la remontée du second piston vers sa position de repos ; et

- la figure 5 représente schématiquement une vue partielle du système hydraulique commandé au moment choisi du déclenchement pour libérer le clapet et permettre la brusque remontée du premier piston sous l'action de la pression extérieure au corps et la création d'ondes sismiques.

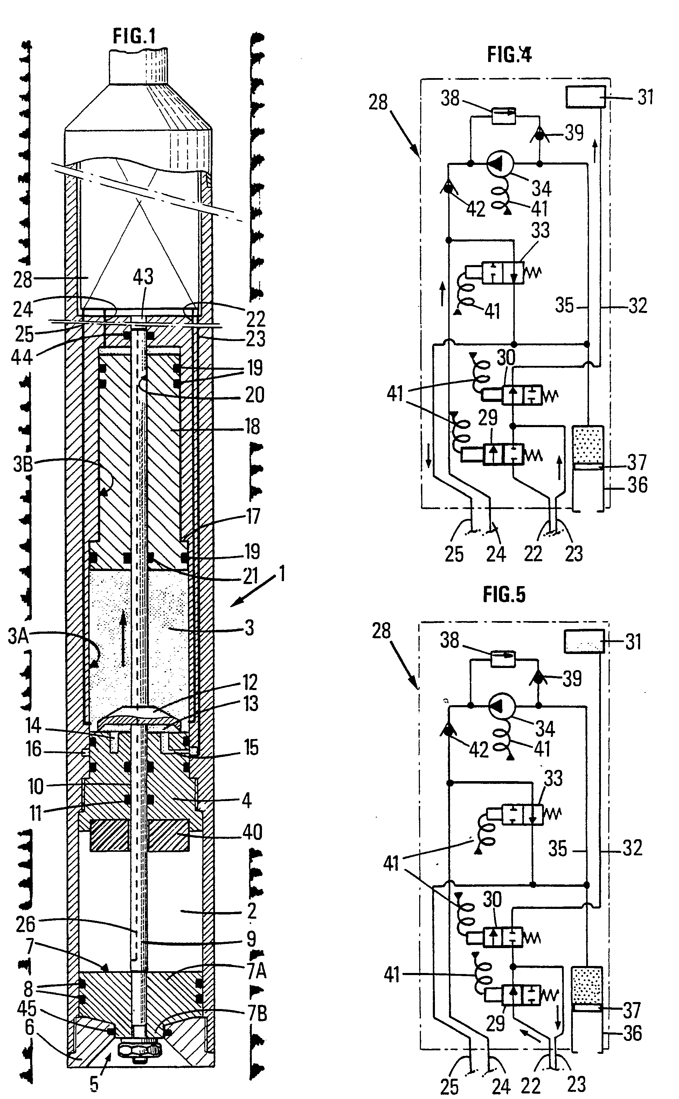

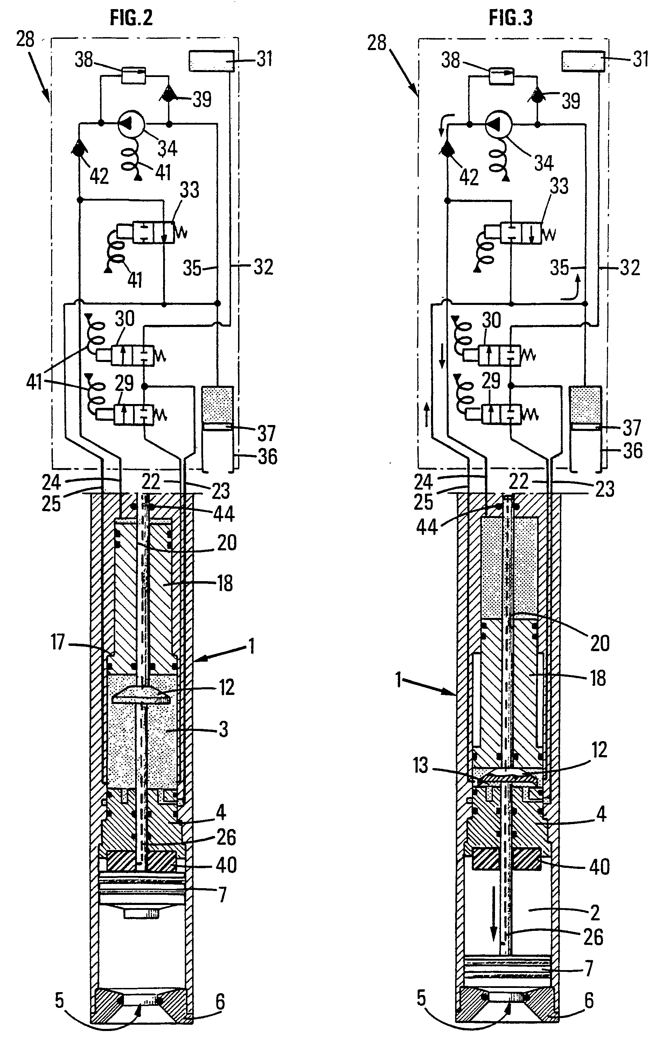

Si l'on se reporte à la figure 1, on voit que le dispositif comporte un corps rigide allongé 1 adapté à être descendu depuis la surface dans un puits foré, à l'extrémité inférieure d'un câble de manœuvre (non représenté) comportant des conducteurs électriques. Le corps rigide 1 comporte deux chambres 2, 3 coaxiales, isolées l'une de l'autre par un élément de séparation 4, constituée d'une pièce rapportée fixée à la paroi latérale du corps. La première chambre 2 communique avec l'extérieur, à son extrémité opposée à l'élément de séparation 4, par une ouverture 5 ménagée dans un bouchon 6 vissé à l'extrémité du corps.

Le dispositif comporte aussi un premier piston 7 pourvu de deux parties 7A, 7B coaxiales dont les sections respectives sont sensiblement égales à celles de la première chambre 2 et de son ouverture 5. La forme et les dimensions des deux parties du piston 7 sont choisies de manière que la partie 7B vienne s'introduire dans l'ouverture 5 lorsque la partie 7A vient en appui contre le bouchon 6. Des joints d'étanchéité 8, 45 sont disposés respectivement autour de la partie 7A pour isoler l'une de l'autre les parties de la chambre 2 de part et d'autre du premier piston, et autour de la partie 7B, de manière que lorsque celle-ci est engagée dans l'ouverture 5, la première chambre soit isolée du milieu extérieur. Une tige 9, de longueur supérieure à celle des deux chambres 2, 3, est disposée dans l'axe du corps et traverse l'élément de séparation 4 par une ouverture 10 ménagée dans celui-ci. Des joints d'étanchéité 11 sont disposés dans l'ouverture 10 autour de la tige 9, pour isoler les deux chambres l'une par rapport à l'autre. A l'extrémité de la chambre 3 opposée à l'élément de séparation, la tige 9 coulisse dans un alésage central 43 du corps 51. Des joints d'étanchéité 44 sont disposés dans cet alésage pour rendre étanche le coulissement de la tige et isoler de la chambre 3, la partie dudit alésage au-dessus de l'extrémité de la tige. La tige 9 est fixée dans la première chambre 2 au premier piston 7 et dans la seconde chambre à un clapet 12 dont la section est supérieure à celle de l'ouverture 5. La distance entre le clapet 12 et le premier piston 7 est choisie de préférence pour que, lorsque ce dernier vient obstruer l'ouverture 5 de la première chambre 2, le clapet soit en contact avec l'élément 4.

Un évidement 13 est ménagé dans la face du clapet en regard de l'élément 4 et une cavité annulaire 14 de diamètre inférieur à celui du clapet est ménagée dans ladite paroi. Un conduit radial 15 la fait communiquer avec une rainure 16 de la surface intérieure du corps.

La seconde chambre 3 comporte une première partie 3A dans laquelle se déplace le clapet 12 et une seconde partie 3B de section inférieure à celle de la première. Les deux parties sont séparées par un épaulement 17. La course et la section du clapet 12 sont respectivement inférieures à la longueur et la section de cette première partie de chambre 3A.

Un second piston 18 comportant deux parties de section respectivement égales aux deux parties de la seconde chambre et pourvu à sa périphérie de joints annulaires 19 est adapté à coulisser de manière étanche dans cette seconde chambre 3. Le second piston comporte un alésage central 20 et un joint circulaire 21 permettant le coulissement étanche de la tige 9 associée au premier piston.

Le système hydraulique de manœuvre comporte quatre canalisations 22, 23, 24 et 25 parallèles à l'axe du corps 1, qui sont ménagées dans la paroi extérieure de celui-ci. Les canalisations 22, 23 débouchent à une première extrémité respectivement au voisinage de la base de la seconde chambre 3 et dans la rainure circulaire 16 de la paroi du corps. Les canalisations 24, 25 débouchent à une première extrémité au voisinage respectivement des deux extrémités opposées de la seconde chambre 3. Une canalisation 26 ménagée dans l'axe de la tige 9 fait communiquer la partie de la chambre 2 comprise entre l'élément de séparation 4 et le premier piston, avec l'alésage central 43.

Des moyens d'évacuation (non représentés) comportant par exemple un canal traversant le premier piston 7 de part en part, associé à une soupape qui est actionnée mécaniquement lorsque la première partie 7A du piston vient au contact de la paroi intérieure du bouchon 6, permettent d'évacuer le volume de fluide extérieur à forte pression qui peut se trouver confiné entre la paroi intérieure du bouchon 6 et la partie 7A du piston, lorsque la partie 7B de celui-ci vient boucher étroitement l'ouverture 5. L'évacuation se produit vers l'intérieur de la chambre 2 et vers un compartiment à la pression atmosphérique par l'intermédiaire du canal axial de la tige 9.

Les canalisations 22, 23, 24 et 25 et l'alésage central 43 où coulisse la tige 9 aboutissent à un compartiment 28 du corps, contenant des éléments dont le détail est représenté aux figures 2 à 5.

La canalisation 23 est connectée à son autre extrémité à l'entrée de deux électro-vannes 29, 30 à deux voies fermées en position de repos. Les sorties de celles-ci sont connectées respectivement à la canalisation 22 et à une canalisation 32 communiquant avec un réservoir 31 contenant de l'air à une pression très inférieure à la pression régnant à l'extérieur du corps dans les conditions normales d'utilisation du dispositif, de l'air à la pression atmosphérique par exemple. La pression à l'intérieur du compartiment 28 est égale à celle régnant dans le réservoir 31.

La canalisation 24 communique avec l'entrée d'une électro-vanne 33 à deux voies, ouverte en position de repos et, par l'intermédiaire d'une valve anti-retour 42 avec la sortie d'une pompe hydraulique 34 mue par un moteur électrique (non représenté). L'entrée de la pompe 34 est connectée par une canalisation 35 avec la sortie de l'électro-vanne 33 et avec la canalisation 25. La canalisation 35 est en outre connectée à l'entrée d'un cylindre 36 communiquant à une extrémité avec l'extérieur du corps et fermé par un piston libre 37 adapté à maintenir le fluide hydraulique à l'entrée de la pompe et à la base de la seconde chambre 3, à une pression égale à la pression extérieure. Un élément de circuit comportant une soupape 38 tarée à une pression déterminée et une valve anti-retour 39, est disposée en dérivation sur la pompe 34, pour limiter la surpression créée en fonctionnement par celle-ci. La pompe, le réservoir 31 et les électro-vannes 29, 30, 33 constituent les moyens moteurs du système hydraulique de manoeuvre.

Une couche 40 d'un matériau amortisseur est fixée à l'élément de séparation 4, du côté de la première chambre, pour freiner le premier piston 7 en fin de course.

Les électro-vannes et le moteur électrique actionnant la pompe 34 sont alimentés par l'intermédiaire de conducteurs électriques 41 reliés aux conducteurs inclus dans le câble supportant le dispositif dans le puits.

Le dispositif fonctionne de la manière suivante :
- Dans sa position de repos (figure 2), la pompe est à l'arrêt et l'électro-vanne 33 est ouverte. Les pressions du fluide hydraulique aux deux extrémités de la seconde chambre 3 sont égales à la pression extérieure au corps. La surface du second piston 18 étant plus grande du côté du clapet 12 que du côté opposé, la force résultant de l'application sur ses faces opposées de cette pression a pour effet de le maintenir en position haute. La pression dans le volume de la première chambre 2 entre l'élément de séparation 4 et le premier piston 7 étant très inférieure à la pression extérieure, l'ensemble du premier piston et du clapet 12 est maintenu à sa position haute.

- Les deux électro-vannes 29, 30 étant maintenues au repos, on actionne simultanément la pompe hydraulique 34 et l'électro-vanne 33, de manière à fermer celle-ci et à établir dans la partie supérieure de plus faible section de la seconde chambre 3, une pression extérieure (figure 3).

Le second piston 18 se déplace vers le bas et vient s'appliquer contre le clapet 12 qu'il entraîne dans sa translation, jusqu'à ce qu'il vienne s'appliquer sur l'élément de séparation 4 et que l'évidement 13 du clapet soit isolé du reste de la seconde chambre 3. Le premier piston occupe alors sa première position (position basse) où il obstrue l'ouverture 5 du corps 1.

- On commande (figure 4) alors l'ouverture de l'électro-vanne 30 et la mise en communication de l'évidement 13 du clapet 12 avec le réservoir à la pression atmosphérique 31 par l'intermédiaire de la cavité annulaire 14 dans l'élément de séparation 4 et les canalisations 23 et 32. Les sections respectives de la partie 7B du premier piston et du clapet sont choisies de manière que la force qui résulte de l'application à celui-ci de la différence de pression entre la pression extérieure et la pression atmosphérique, soit suffisante pour maintenir le premier piston en appui contre le bouchon 6 en l'absence de toute poussée supplémentaire de la part du second piston. On commande ensuite l'arrêt de la pompe 34 et l'on interrompt l'alimentation électrique de la troisième électro-vanne 33 qui revient en position d'ouverture. Les deux faces opposées du second piston 18 se retrouvant à la même pression et étant de surfaces inégales, celui-ci remonte vers le haut de la seconde chambre, en raison des forces inégales qui lui sont appliquées par le fluide hydraulique, jusqu'à la position représentée à la figure 1.

- Au moment choisi du déclenchement (figure 5) on interrompt l'alimentation électrique de la seconde électro-vanne 30 et on excite la première électro-vanne 29. La communication avec le réservoir 31 est interrompue et les canalisations 22 et 23 sont de nouveau réunies. La pression s'égalisant des deux côtés du clapet 12, la force de retenue cesse et le premier piston 7, propulsé par le liquide extérieur agissant par l'ouverture 5, revient brusquement à sa position de repos (seconde position). Sous l'effet de l'implosion, des impulsions sismiques intenses sont émises à l'intérieur du puits et transmises aux formations environnantes.

**Revendications**

1. Dispositif pour engendrer des impulsions acoustiques par implosion à l'intérieur d'un puits, comportant un corps rigide allongé (1) de section inférieure à celle du puits, le corps rigide comportant une première et une seconde chambres coaxiales (2, 3) dans le prolongement l'une de l'autre et séparées par un élément de séparation fixe (4), un premier piston (7) adapté à coulisser de manière étanche à l'intérieur de la première chambre (2) entre une première position et une seconde position, le premier piston (7) étant solidaire d'un clapet (12) adapté à venir s'appuyer contre un siège (13) dans la première position du premier piston (7), un second piston (18) adapté à coulisser de manière étanche à l'intérieur de la seconde chambre (3) et dont la course est au moins égale à celle du premier piston (7) entre sa première et sa seconde position, des moyens pour établir dans la première chambre (2), d'un côté du premier piston, une pression très inférieure à la pression régnant à la profondeur d'utilisation et un système hydraulique de manœuvre, comportant des moyens moteurs (34) et des circuits hydrauliques (22-25), disposé à l'intérieur du corps rigide (1) pour déplacer le premier piston (7) vers sa première position, par poussée du second piston (18) sur le clapet (12) jusqu'à son siège (13), pour maintenir par intermittence le clapet (12) contre son siège, pour fixer le premier piston (7) dans sa première position lorsque le second piston (18) est ramené vers l'extrémité de la seconde chambre (3) opposée à l'élément de séparation, et pour déclencher la propulsion du premier piston (7) vers l'élément de séparation (4), la première chambre (2) comportant à son extrémité opposée à l'élément de séparation (4) une ouverture (5) de section inférieure à celle de la première chambre (2), caractérisé en ce que le premier piston (7) comporte une première partie (7A) de section adaptée à celle de la première chambre (2) et une seconde partie (7B) plus resserrée de section adaptée à celle de ladite ouverture (5) qui clôt celle-ci dans la première position du premier piston (7), le recul de celui-ci vers sa seconde position laissant la pression régnant à la profondeur d'utilisation pénétrer à l'intérieur de la première chambre (2), le clapet (12) est adapté à se déplacer dans la seconde chambre (3) entre ledit élément de séparation (4) et ledit second piston (18), la section dudit clapet (12) est supérieure à celle de ladite seconde partie (7B) du premier piston, le siège (13) est ménagé sur l'élément de séparation fixe (4), et le corps rigide (1) est relié par un câble de manœuvre comportant des conducteurs électriques à une installation de surface.

2. Dispositif selon la revendication 1, caractérisé en ce que la seconde chambre (3) comporte deux parties (3A, 3B) de sections inégales, le second piston (18) comporte deux parties de sections différentes adaptées respectivement aux sections des deux parties de la seconde chambre (3), l'extrémité du second piston (18) de section la plus grande étant adaptée à venir en appui sur le clapet (12), en ce que le siège du clapet comporte une cavité annulaire (14) et en ce que le système hydraulique de manœuvre comporte une source de pression (34), un premier circuit hydraulique (24, 25) et un premier moyen de commutation (33) pour établir par intermittence une surpression dans la partie de la seconde chambre (3) de plus faible section et un second circuit hydraulique (22, 23) associé à un ensemble de commutation (29, 30) pour mettre ladite cavité annulaire (14) du siège en communication par intermittence avec un réservoir (31) dont la pression est très inférieure à celle régnant dans la seconde chambre (3), lorsque le clapet (12) est en appui sur son siège.

3. Dispositif selon la revendication 2, caractérisé en ce que la source de pression (34) est une pompe hydraulique communiquant par le premier circuit (24, 25) avec la partie de plus faible section de la seconde chambre (3) et avec la partie opposée de celle-ci par l'intermédiaire d'une électro-vanne (33) ouverte en position de repos et actionnée en même temps que la pompe, l'ensemble de commutation comportant deux électro-vannes (29, 30) fermées en position de repos et actionnées successivement, faisant communiquer ladite cavité (14) du siège par l'intermédiaire du second circuit hydraulique (22, 23), respectivement avec ledit réservoir (31) et avec la partie de plus grande section de la seconde chambre (3).

4. Dispositif selon la revendication 1, caractérisé en ce qu'une couche (40) d'un matériau amortisseur est de préférence intercalée entre le premier piston (7) et l'élément (4) séparant les deux chambres (2, 3) pour freiner le mouvement dudit premier piston, au voisinage de sa seconde position.

5. Dispositif selon la revendication 2, caractérisé en ce que le premier moyen de commutation (33) est une électro-vanne ouverte en position de repos et mettant en communication, lorsqu'elle est actionnée électriquement, les volumes de la seconde chambre (3) de part et d'autre du second piston (18), par l'intermédiaire de canalisations (24, 25), le fluide hydraulique à sa plus basse pression étant maintenu à la pression régnant à l'extérieur du corps (1) par un piston libre (37) déplaçable dans un cylindre (36) ouvert à l'une des extrémités, et en ce que l'ensemble de commutation comporte deux électro-vannes (29, 30) fermées en positions de repos, ladite cavité annulaire (14) du siège étant mise en communication par fermeture sélective de ces deux électro-vannes (29, 30), avec la partie de la seconde chambre (3) au voisinage de l'élément de séparation (4) ou avec ledit réservoir (31).

6. Dispositif selon la revendication 1, caractérisé en ce que le premier piston (7) dans sa première position obture l'ouverture (5) qui est pratiquée dans une pièce (6) rapportée à l'extrémité ouverte de la première chambre (2).

7. Dispositif selon 1, revendication 2, caractérisé en ce que l'ouverture (5) de la première chambre (2) est délimitée par une pièce rapportée (6) formant siège pour le premier piston (7) dans sa première position, et en ce qu'il comporte des moyens pour supprimer les surpressions entre le premier piston (7) et ladite pièce rapportée (6) dans la première position dudit piston (7).

## Claims

1. Device for generating acoustic pulses by implosion inside a well, comprising an elongated rigid body (1) of lesser section than the well, the rigid body comprising a first and a second chamber (2, 3) extending coaxially in the extension of one another and separated by a fixed separating element (4), a first piston (7) adapted to slide forming a seal inside the first chamber (2) between a first position and a second position, the first piston (7) being locked to a valve (12) adapted to bear againt a seat (13) in the first position of the first piston (7), a second piston (18) adapted to slide forming a seal inside the second chamber (3) and the stroke of which is at least equal to that of the first piston (7) between its first and its second position, means for establishing a pressure well below the pressure at the depth of use in the first chamber (2) on one side of the first piston, and a hydraulic operating system comprising moving means (34) and hydraulic circuits (22-25) disposed inside the rigid body (1) to move the first piston (7) to its first position by pushing the second piston (18) on the valve (12) as far as its seat (13), to intermittently hold the valve (12) on its seat, to fix the first piston (7) in its first position when the second piston (18) is brought towards the opposite end of the second chamber (3) to the separating element, and to trip the propulsion of the first piston (7) towards the separating element (4), the first chamber (2) having an opening (5) of lesser section than the first chamber (2) at the opposite end to the separating element (4), characterized in that the first piston (7) comprises a first part (7A) with a section adapted to that of the first chamber (2) and narrower second part (7B) with a section adapted to that of said opening (5) which closes the latter in the first position of the first piston (7), the movement of the latter back to its second position allowing the pressure prevailing at the depth of use to enter the interior of the first chamber (2), in that the valve (12) is adapted to move in the second chamber (3) between said separating element (4) and said second piston (18), in that the section of said valve (12) is greater than that of said second part (7B) of the first piston, in that the seat (13) is formed on the fixed separating element (4), and in that the rigid body (1) is connected to a surface installation by means of an operating cable comprising electrical conductors.

2. Device as in claim 1, characterized in that the second chamber (3) comprises two parts (3A), (3B) with unequal sections, in that the second piston (18) comprises two parts with different sections adapted respectively to the sections of the two parts of the second chamber (3), the end of the second piston (18) of greater section being adapted to bear against the valve (12), in that the seat of the valve comprises an annular cavity (14) and in that the hydraulic operating system comprises a pressure source (34), a first hydraulic circuit (24, 25) and a first switching means (33) to intermittently establish a higher pressure in the part of the section chamber (3) of lesser section, and a second hydraulic circuit (22, 23) associated with a switching assembly (29, 30) to make said annular cavity (14) of the seat communicate intermittently with a reservoir (31) in which the pressure is well below that in the second chamber (3) when the valve (12) is resting on its seat.

3. Device as in claim 2, characterized in that the pressure source (34) is a hydraulic pump communicating by means of the first circuit (24, 25) with the part of lesser section of the second chamber (3) and with the opposite part of the latter through the intermediary of a solenoid valve (33) which is open in the rest position and operated at the same time as the pump, the switching assembly comprising two solenoid valves (29, 30) which are closed in the rest position and operated successively, making said cavity (14) of the seat communicate respectively with said reservoir (31) and with the part of larger section of the second chamber (3) through the intermediary of the second hydraulic circuit (22, 23).

4. Device as in claim 1, characterized in that a layer (40) of a damping material is preferably inserted between the first piston (7) and the element (4) separating the two chambers (2, 3) to decelerate the movement of said first piston in the vicinity of its second position.

5. Device as in claim 2, characterized in that the first switching means (33) is a solenoid valve which is open in the rest position and puts the volumes of the second chamber (3) on either side of the second piston (18) in communication with one another through the intermediary of lines (24, 25) when it is operated electrically, the hydraulic fluid at its lowest pressure being kept at the pressure prevailing outside the body (1) by a free piston (37) which can move in a cylinder (36) open at one of the ends, and in that the switching assembly comprises two solenoid valves (29, 30) which are closed in the rest position, said annular cavity (14) of the seat being put in communication with the part of the second chamber (3) in the vicinity of the separating element (4) or with said reservoir (31) by selective closure of these two solenoid valves (29, 30).

6. Device as in claim 1, characterized in that in its first position the first piston (7) blocks the opening (5) which is formed in a separate part (6) at the open end of the first chamber (2).

7. Device as in claim 2, characterized in that the opening (5) of the first chamber (2) is defined by a separate part (6) forming a seat for the first piston (7) in its first position, and in that it comprises means to eliminate the excess pressures between the first piston (7) and said separate part (6) in the first position of said piston (7).

**Patentansprüche**

1. Vorrichtung zur Erzeugung akustischer Impulse durch Implosion im Inneren eines Bohrloches, mit einem steifen länglichen Körper (1) von einem Querschnitt kleiner als dem des Bohrloches, wobei der steife Körper erste und zweite koaxiale Kammern (2, 3) in Verlängerung voneinander trägt, die durch ein festes Trennelement (4) voneinander getrennt sind, mit einem ersten Kolben (7), der so ausgebildet ist, daß er dicht im Inneren der zweiten Kammern (2) zwischen einer ersten und einer zweiten Stellung gleitet, wobei der erste Kolben (7) fest mit einer Klappe (12) verbunden ist, die so ausgelegt ist, daß sie sich gegen einen Sitz (13) in der ersten Stellung des ersten Kolbens (7) abstützt und ein zweiter Kolben (18) so ausgebildet ist, daß er dicht im Inneren der zweiten Kammer (3) gleitet und dessen Hub wenigstens gleich dem des ersten Kolbens (7) zwischen seiner ersten und seiner zweiten Stellung ist, Einrichtungen, um in der ersten Kammer (2) auf der einen Seite des ersten Kolbens einen Druck herzustellen, der sehr viel niedriger als der auf Benützungstiefe herrschende ist und mit einem hydraulischen Betätigungssystem mit Antriebseinrichtungen (34) sowie hydraulischen Kreisen (22-25), das im Innern des steifen Körpers (1) angeordnet ist, um den ersten Kolben (7) gegen seine erste Stellung durch Schub des zweiten Kolbens (18) auf die Klappe (12) bis zu seinem Sitz (13) zu verschieben, um intermittierend die Klappe (12) gegen ihren Sitz zu halten und den ersten Kolben (7) in seiner ersten Stellung zu fixieren, wenn der zweite Kolben (18) gegen das Ende der zweiten Kammer, die dem Trennelement gegenüberliegt, rückgeführt ist, und um den Vortrieb des ersten Kolbens (7) gegen das Trennelement (4) auszulösen, wobei die erste Kammer (2) an ihrem dem Trennelement (4) gegenuberliegenden Ende eine Öffnung (5) von einem Querschnitt aufweist, der geringer als der der ersten Kammer (2) ist, dadurch gekennzeichnet, daß der erste Kolben (7) einen ersten Teil (7A) von einem Querschnitt aufweist, der auf den der ersten Kammer (2) abgestimmt ist sowie einen zweiten engeren Teil (7B), von einem Querschnitt, der an den diese Öffnung (5) angepaßt ist, welche diese in der ersten Stellung des ersten Kolbens (7) schließt, wobei dessen Rücklauf in die zweite Stellung den auf Benützungstiefe herrschenden Druck in das Innere der ersten Kammer (2) eindringen läßt und daß die Klappe (12) so ausgelegt ist, daß sie sich in der zweiten Kammer (3) zwischen diesem Trennelement (4) und diesem zweiten Kolben (18) verschiebt, wobei der Querschnitt dieser Klappe (12) größer als der dieses zweiten Teils (7B) des ersten Kolbens ist, dessen Sitz (13) auf dem festen Trennelement (4) vorgesehen ist und wobei der steife Körper (1) über ein Betätigungskabel mit elektrischen Leitern mit einer Oberflächeninstallation verbunden ist.

2. Vorrichtung nach Anspruch 1, dadurch gekennzeichnet, daß die zweite Kammer (3) zwei Teile (3A, 3B) ungleichen Querschnitts aufweist, daß der zweite Kolben (18) zwei Teile unterschiedlichen Querschnitts umfaßt, die jeweils an die Querschnitte der beiden Teile der zweiten Kammer (3) angepaßt sind, wobei das Ende des zweiten Kolbens (18) größeren Querschnitts so ausgebildet ist, daß es in Abstutzung gegen die Klappe (12) kommt, daß der Sitz der Klappe einen Ringhohlraum (14) umfaßt und daß das hydraulische Betätigungssystem eine Druckquelle (34) einen ersten hydraulischen Kreis (24, 25) und ein erstes Schaltmittel (33) aufweist, um intermittierend einen Überdruck in dem Teil der zweiten Kammer (3) von geringerem Querschnitt herzustellen und einen zweiten hydraulischen Kreis (22, 23), der einer Schaltanordnung (29, 30) zugeordnet ist, um diese Ringkammer (14) des Sitzes intermittierend in Verbindung mit einem Speicher (31) zu setzen, dessen Druck sehr viel unter dem in der zweiten Kammer (3) herrschenden liegt, wenn die Klappe (12) sich gegen ihren Sitz abstützt.

3. Vorrichtung nach Anspruch 2, dadurch gekennzeichnet, daß die Druckquelle (34) eine hydraulische Pumpe ist, welche über den ersten Kreis (24, 25) mit dem Teil geringsten Querschnitts der zweiten Kammer (3) und mit dem gegenüberliegenden Teil hiervon vermittels eines Magnetventils (33) in Verbindung steht, welches in Ruhestellung offen ist und gleichzeitig mit der Pumpe betätigt wird, wobei die Schaltanordnung zwei Magnetventile (29, 30) umfaßt, welche in Ruhestellung geschlossen sind und nacheinander betätigt werden und diesen Hohlraum (14) des Sitzes vermittels des zweiten hydraulischen Kreises (22, 23) jeweils mit dem Speicher (31) und mit dem Teil größten Querschnitts der zweiten Kammer (3) in Verbindung setzen.

4. Vorrichtung nach Anspruch 1, dadurch gekennzeichnet, daß eine Schicht (40) aus einem Dämpfungsmaterial vorzugsweise zwischen dem ersten Kolben (7) und dem die beiden Kammern (2, 3) trennenden Element (4) zwischengeschaltet ist, um die Bewegung des ersten Kolbens benachbart seiner zweiten Stellung abzubremsen.

5. Vorrichtung nach Anspruch 2, dadurch gekennzeichnet, daß das erste Schaltmittel (33) ein in Ruhestellung offenes Magnetventil ist, das, wenn es elektrisch betätigt wird, die Volumina der zweiten Kammer (3) zu beiden Seiten des zweiten Kolbens vermittels Leitungen (24, 25) in Verbindung setzt, wobei das hydraulische Fluid bei seinem niedrigsten Druck bei dem außerhalb des Körpers (1) herrschenden Druck vermittels eines freien Kolbens (37) gehalten wird, der in einem Zylinder (36) verschiebbar ist, der an einem seiner Enden offen ist und daß die Schaltanordnung zwei in Ruhestellung geschlossene Magnetventile (29, 30) umfaßt, wobei der Ringraum (14) des Sitzes durch selektives Schließen dieser beiden Magnetventile (29, 30) in Verbindung mit dem Teil der zweiten Kammer (3) benachbart dem Trennelement (4) oder mit dem Speicher (31) gesetzt wird.

6. Vorrichtung nach Anspruch 1, dadurch gekennzeichnet, daß der erste Kolben (7) in seiner ersten Stellung die Öffnung (5) verschließt, die in einem an dem offenen Ende der ersten Kammer (2) angesetzten Teil (6) ausgespart ist.

7. Vorrichtung nach Anspruch 2, dadurch gekennzeichnet, daß die Öffnung (5) der ersten Kammer (2) begrenzt ist durch ein angesetztes Teil (6), welches den Sitz für den ersten Kolben (7) in seiner ersten Stellung bildet und daß sie Einrichtungen umfaßt, um die Überdrücke zwischen dem ersten Kolben (7) und diesem aufgesetzten Teil (6) in der ersten Stellung dieses Kolbens (7) zu unterdrücken.

0 146 448

FIG.1

FIG.4

FIG.5

# FIG.2

# FIG.3